# EUROPEAN PATENT APPLICATION

(11) **EP 4 714 827 A1**
(43) Date of publication of application: **25.03.2026**
(21) Application number: 25203506.8
(22) Date of filing: 19.09.2025
(51) Int. Cl.: B64D 27/02, B64D 27/33, B64C 27/04, B64D 33/04

(54) **BLENDED EXHAUST SYSTEM FOR AN AIRCRAFT PROPULSION SYSTEM**

(30) Priority: 19.09.2024 US 202463696704 P; 16.09.2025 US 202519330443
(71) Applicant: PRATT & WHITNEY CANADA CORP., Longueuil, Québec J4G 1A1 (CA)
(72) Inventor: LABRECQUE, Michel, (01BE5) Longueuil, J4G 1A1 (CA); NGUYEN, Kevin, (01BE5) Longueuil, J4G 1A1 (CA)
(74) Representative: Dehns

(57) **Abstract**

A propulsion system (20) for an aircraft includes a propulsion rotor, an engine (22), a propulsor module (24), and a blended exhaust system. The engine (220) has an axis (48), is mechanically coupled to the propulsion rotor, and includes an exhaust section (38). The propulsor module (24) includes a housing forming a propulsor duct with a duct inlet and duct outlet, and a propulsor assembly (94) with an electric motor (112) coupled to a bladed propulsor disposed within the propulsor duct. The blended exhaust system includes an exhaust duct assembly having an engine exhaust inlet at the exhaust section, a propulsor exhaust inlet at the duct outlet, and a blended exhaust outlet. The exhaust duct assembly is configured to receive an engine exhaust stream and a propulsor exhaust stream, form a blended exhaust stream including both, and direct the blended exhaust stream out of the blended exhaust system through the blended exhaust outlet.

## Description

### TECHNICAL FIELD

This disclosure relates generally to aircraft propulsion systems and, more particularly, to exhaust systems for an aircraft propulsion system.

### BACKGROUND OF THE ART

A propulsion system for an aircraft may include an exhaust system configured to exhaust a combustion gas from one or more engines of the propulsion system. Various exhaust systems are known in the art. While these known exhaust systems may be suitable for their intended purposes, there is always room in the art for improvement.

### SUMMARY

According to an aspect of the present invention, a propulsion system for an aircraft includes a propulsion rotor, an engine, a propulsor module, and a blended exhaust system. The engine has an axis. The engine is mechanically coupled to the propulsion rotor. The engine includes an exhaust section. The propulsor module includes a housing and a propulsor assembly. The housing forms a propulsor duct comprising a duct inlet and a duct outlet. The propulsor assembly includes an electric motor and a bladed propulsor disposed within the propulsor duct. The bladed propulsor is coupled with the electric motor. The blended exhaust system includes an exhaust duct assembly. The exhaust duct assembly includes an engine exhaust inlet at the exhaust section, a propulsor exhaust inlet at the duct outlet, and a blended exhaust outlet. The exhaust duct assembly is configured to form an engine exhaust stream, a propulsor exhaust stream, and a blended exhaust stream with the exhaust duct assembly receiving the engine exhaust stream from the exhaust section, the exhaust duct assembly receiving the propulsor exhaust stream from the duct outlet, and the exhaust duct assembly directing the blended exhaust stream out of the blended exhaust system through the blended exhaust outlet. The blended exhaust stream includes the engine exhaust stream and the propulsor exhaust stream.

In any of the aspects or embodiments described above and herein, the propulsion system may further include a generator mechanically coupled with the engine and electrically connected with the electric motor.

In any of the aspects or embodiments described above and herein, the engine exhaust stream may include combustion exhaust gas from the engine exhaust system, the propulsor exhaust stream may include ambient air from the propulsor module, and the blended exhaust stream may include a mixture of the combustion exhaust gas and the ambient air.

In any of the aspects or embodiments described above and herein, the exhaust duct assembly may direct the engine exhaust stream from the exhaust section to the blended exhaust stream, the exhaust duct assembly may direct the propulsor exhaust stream from the duct outlet to the blended exhaust stream, and the exhaust duct assembly may direct the blended exhaust stream from an interface of the engine exhaust stream and the propulsor exhaust stream to the blended exhaust outlet.

In any of the aspects or embodiments described above and herein, the exhaust duct assembly may include an engine exhaust duct extending from the engine exhaust inlet to the blended exhaust outlet and a propulsor exhaust duct extending between the propulsor module and the engine exhaust duct, and the propulsor exhaust duct may connect the propulsor module in fluid communication with the engine exhaust duct at an axially intermediate portion of the engine exhaust duct.

In any of the aspects or embodiments described above and herein, the propulsion system may include the propulsor module and a second propulsor module, the second propulsor module may include a second housing and a second propulsor assembly, the second housing may form a second propulsor duct comprising a second duct inlet and a second duct outlet, the second propulsor assembly may include a second electric motor and a second bladed propulsor disposed within the second propulsor duct, and the second bladed propulsor may be with the second electric motor.

In any of the aspects or embodiments described above and herein, the exhaust duct assembly may form a second propulsor exhaust stream, the exhaust duct assembly may receive the second propulsor exhaust stream from the second duct outlet, and the blended exhaust stream may further include the second propulsor exhaust stream.

In any of the aspects or embodiments described above and herein, the blended exhaust outlet may include a single outlet from the exhaust duct assembly.

In any of the aspects or embodiments described above and herein, the blended exhaust outlet may include a first blended exhaust outlet and a second blended exhaust outlet, the first blended exhaust outlet may receive a first engine exhaust stream from the exhaust section and the propulsor exhaust stream, and the second blended exhaust outlet may receive a second engine exhaust stream from the exhaust section and the second propulsor exhaust stream.

In any of the aspects or embodiments described above and herein, the exhaust duct assembly may further include a forced flow mixer structure disposed between the engine exhaust stream and the propulsor exhaust stream.

In any of the aspects or embodiments described above and herein, the blended exhaust system may include an ejector exhaust nozzle assembly forming the engine exhaust stream and the propulsor exhaust stream.

In any of the aspects or embodiments described above and herein, the propulsion system may include a second engine mechanically coupled to the propulsion rotor, and the second engine may include a second exhaust section connected in fluid communication with the blended exhaust outlet by the exhaust duct assembly.

According to another aspect of the present invention, a propulsion system for an aircraft includes an engine, a propulsor module, and a blended exhaust system. The engine includes an exhaust section. The propulsor module includes a housing forming a propulsor duct between a duct inlet and a duct outlet, and a propulsor assembly including an electric motor and a bladed propulsor disposed within the propulsor duct. The blended exhaust system includes an exhaust duct assembly having at least one engine exhaust duct extending from the exhaust section, at least one propulsor exhaust duct extending from the duct outlet, and at least one blended exhaust outlet. The at least one engine exhaust duct is connected in fluid communication with the at least one propulsor exhaust duct at an axially intermediate portion of the exhaust duct assembly. The at least one blended exhaust outlet is configured to receive a blended exhaust stream including exhaust from the at least one engine exhaust duct and exhaust from the at least one propulsor exhaust duct.

In any of the aspects or embodiments described above and herein, the at least one blended exhaust outlet may include a first blended exhaust outlet and a second blended exhaust outlet, the exhaust duct assembly may include a first engine exhaust duct and a first propulsor exhaust duct connected in fluid communication at an axially intermediate portion and configured to deliver a first blended exhaust stream to the first blended exhaust outlet, and a second engine exhaust duct and a second propulsor exhaust duct connected in fluid communication at an axially intermediate portion and delivering a second blended exhaust stream to the second blended exhaust outlet.

In any of the aspects or embodiments described above and herein, the at least one blended exhaust outlet may include a single blended exhaust outlet, and the exhaust duct assembly may further include a blended exhaust duct disposed between and interconnecting a first propulsor exhaust duct and a second propulsor exhaust duct with the single blended exhaust outlet.

In any of the aspects or embodiments described above and herein, the exhaust section may include an engine exhaust nozzle extending to a distal axial end, and the exhaust duct assembly may further include a propulsor exhaust nozzle circumscribing the engine exhaust nozzle and forming the at least one blended exhaust outlet, the propulsor exhaust nozzle may be disposed radially outward of the engine exhaust nozzle and may form an annular propulsor stream passage between the propulsor exhaust nozzle and the engine exhaust nozzle.

In any of the aspects or embodiments described above and herein, the propulsion system may further include a forced flow mixer structure disposed at the distal axial end and radially between an engine exhaust stream in the engine exhaust nozzle and a propulsor exhaust stream in the annular propulsor stream passage.

In any of the aspects or embodiments described above and herein, the exhaust duct assembly may include an ejector exhaust nozzle assembly, the propulsor exhaust nozzle may form an ejector stream passage downstream of the engine exhaust nozzle, and the exhaust duct assembly may include at least one propulsor exhaust duct including a convergent segment at an upstream end of the propulsor exhaust nozzle.

According to another aspect of the present invention, a method of operating a propulsion system for an aircraft includes driving rotation of a propulsion rotor with an engine mechanically coupled with the propulsion rotor, operating a propulsor module comprising an electric motor and a bladed propulsor by driving rotation of the bladed propulsor with the electric motor, exhausting combustion gas from the engine through a blended exhaust system forming an engine exhaust stream, exhausting ambient air from the propulsor module through the blended exhaust system forming a propulsor exhaust stream, and blending the engine exhaust stream and the propulsor exhaust stream into a blended exhaust stream and discharging the blended exhaust stream from a blended exhaust outlet of the blended exhaust system.

In any of the aspects or embodiments described above and herein, the method may further include operating the engine during a cruise flight condition of the aircraft at between approximately seventy percent and approximately eighty percent of a maximum continuous power of the engine.

The foregoing features and elements may be combined in various combinations without exclusivity, unless expressly indicated otherwise. For example, aspects and/or embodiments of the present disclosure may include any one or more of the individual features or elements disclosed above and/or below alone or in any combination thereof. These features and elements as well as the operation thereof will become more apparent in light of the following description and the accompanying drawings. It should be understood, however, the following description and drawings are intended to be exemplary in nature and non-limiting.

### BRIEF DESCRIPTION OF THE DRAWINGS

FIG. 1 schematically illustrates an aircraft including a propulsion system, in accordance with one or more embodiments of the present disclosure.
FIG. 2 schematically illustrates a portion of the propulsion system including a cutaway, side view of a gas turbine engine, in accordance with one or more embodiments of the present disclosure.
FIGS. 3A-B schematically illustrate cutaway, side views of propulsor modules of the propulsion system, in accordance with one or more embodiments of the present disclosure.
FIG. 4 illustrates a graph depicting an exemplary relationship between propulsion system output power and specific fuel consumption (SFC), in accordance with one or more embodiments of the present disclosure.
FIG. 5 schematically illustrates a blended exhaust system for the propulsion system, in accordance with one or more embodiments of the present disclosure.
FIG. 6 schematically illustrates another blended exhaust system for the propulsion system, in accordance with one or more embodiments of the present disclosure.
FIG. 7 schematically illustrates yet another blended exhaust system for the propulsion system, in accordance with one or more embodiments of the present disclosure.
FIG. 8 schematically illustrates yet another blended exhaust system for the propulsion system, in accordance with one or more embodiments of the present disclosure.
FIG. 9 schematically illustrates yet another blended exhaust system for the propulsion system, in accordance with one or more embodiments of the present disclosure.
FIGS. 10A-B schematically illustrate blended exhaust systems for a multi-engine propulsion system, in accordance with one or more embodiments of the present disclosure.

### DETAILED DESCRIPTION

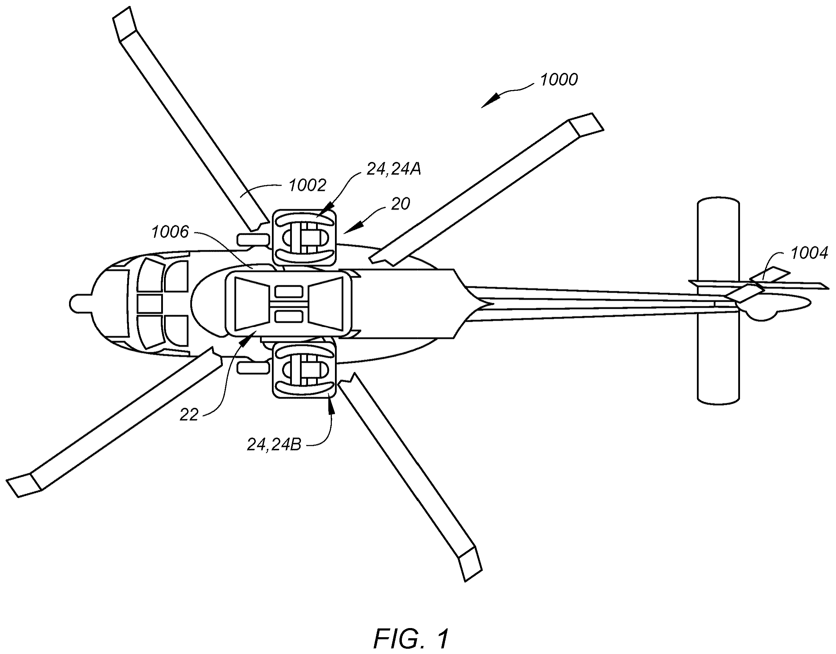

FIG. 1 illustrates an aircraft 1000 including a propulsion system 20. The aircraft 1000 of FIG. 1 is configured as a rotorcraft (e.g., a helicopter). The present disclosure, however, is also applicable to other configurations of aircraft such as, but not limited to, a fixed-wing aircraft (e.g., an airplane), a tilt-rotor aircraft, a tilt-wing aircraft, or another aerial vehicle. The propulsion system 20 of FIG. 1 is configured to drive rotation of propulsion rotors, such as a main rotor 1002 and a tail rotor 1004 of the aircraft 1000, to facilitate propulsion for the aircraft 1000. The propulsion system 20 includes a gas turbine engine 22 and at least one ducted propulsor module 24. For example, the propulsion system 20 of FIG. 1 includes a first ducted propulsor module 24A and a second ducted propulsor module 24B. The present disclosure, however, is not limited to any particular quantity of the propulsor module(s) 24. The aircraft 1000 of FIG. 1 further includes a housing 1006 (e.g., a nacelle, a fuselage, etc.) enclosing and forming a protective outer covering for the gas turbine engine 22.

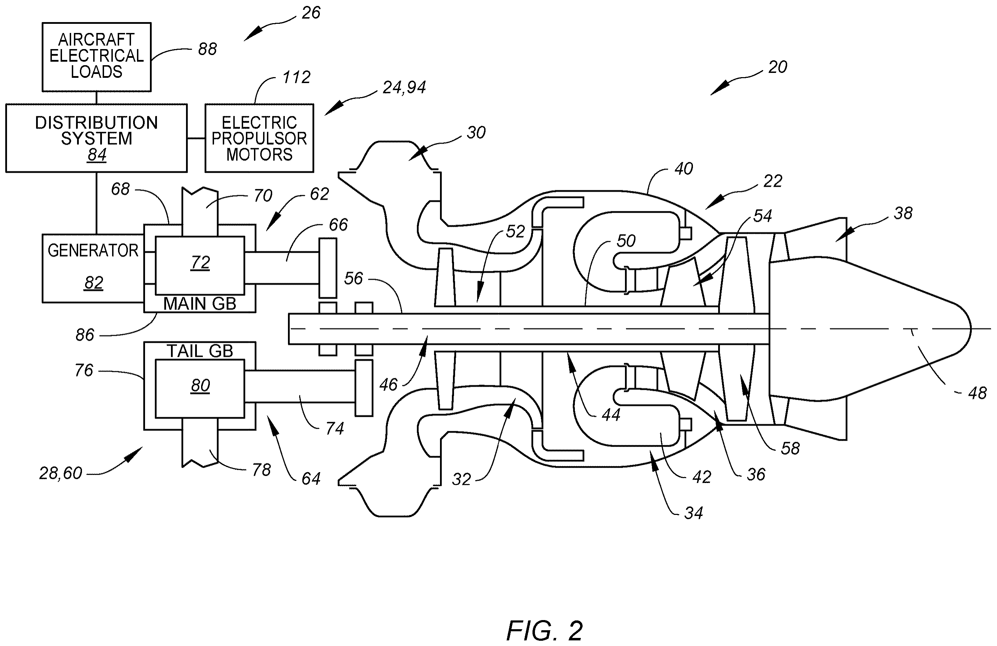

FIG. 2 schematically illustrates the propulsion system 20 and its gas turbine engine 22. As shown in FIG. 2, the propulsion system 20 further includes an electrical assembly 26. The gas turbine engine 22 of FIG. 2 is configured as a turboshaft gas turbine engine configured to mechanically drive rotation of the main rotor 1002 and the tail rotor 1004 (see FIG. 1) through a drivetrain 28. It is contemplated, however, that the present disclosure may also be applied to other gas turbine engine configurations (e.g., a turboprop engine, a turbofan engine, etc.) arranged to mechanically drive a propulsion rotor (e.g., a propeller, a fan, etc.).

The gas turbine engine 22 of FIG. 2 includes an air intake section 30, a compressor section 32, a combustor section 34, a turbine section 36, an exhaust section 38, and an engine static structure 40. The combustor section 34 includes a combustor 42 (e.g., an annular combustor). The turbine section 36 includes a high-pressure turbine section 36A and a power turbine section 36B.

Components of the compressor section 32 and/or the turbine section 34 form a first rotating structure 44 (e.g., a high-pressure spool) and a second rotating structure 46. The first rotating structure 44 and the second rotating structure 46 are mounted for rotation about a rotational axis 48 relative to the engine static structure 40.

The first rotating structure 44 includes a first shaft 50, a bladed compressor rotor 52 for the compressor section 32, and a bladed first turbine rotor 54 for the high-pressure turbine section 36A. The first shaft 50 interconnects the compressor rotor 52 and the first turbine rotor 54.

The second rotating structure 46 includes a second shaft 56 and a bladed second turbine rotor 58 for the power turbine section 36B. The first shaft 50 and the second shaft 56 are concentric and configured to rotate about the rotational axis 48. The present disclosure, however, is not limited to concentric configurations of the first shaft 50 and the second shaft 56. The second shaft 56 interconnects the second turbine rotor 58 and the drivetrain 28.

The second rotating structure 46 is coupled with the main rotor 1002 and the tail rotor 1004 (see FIG. 1) through the drivetrain 28. The drivetrain 28 is configured as a geared drivetrain, where a geartrain 60 is disposed between and operatively couples the second rotating structure 46 with the main rotor 1002 and the tail rotor 1004. The geartrain 60 of FIG. 2 includes a main rotor assembly 62 and a tail rotor assembly 64. The main rotor assembly 62 includes an input shaft 66, a main gearbox 68, and an output shaft 70. The input shaft 66 is coupled with the second shaft 56. The main gearbox 68 includes a gear assembly 72 coupling the input shaft 66 with the output shaft 70. The output shaft 70 is coupled, directly or indirectly, with the main rotor 1002. The tail rotor assembly 64 includes an input shaft 74, a tail gearbox 76, and an output shaft 78. The input shaft 74 is coupled with the second shaft 56. The tail gearbox 76 includes a gear assembly 80 coupling the input shaft 74 with the output shaft 78. The output shaft 78 is coupled, directly or indirectly, with the tail rotor 1004. The present disclosure, however, is not limited to the foregoing exemplary configuration of the drivetrain 28 of FIG. 2.

The engine static structure 40 includes engine cases, cowlings, bearing assemblies, fixed structures, and/or other non-rotating structures configured to form, house, and/or support (e.g., rotationally support) the gas turbine engine sections 30, 32, 34, 36, 38 and components of the gas turbine engine sections 30, 32, 34, 36, 38.

The electrical assembly 26 includes an electrical generator 82 and an electrical distribution system 84. The generator 82 of FIG. 2 is coupled with the gear assembly 72 of the main gearbox 68. The generator 82 is configured to be driven by rotation of the second shaft 56 through the main rotor assembly 62 (e.g., the input shaft 66 and the gear assembly 72). The generator 82 may be mounted on a gearbox housing 86 of the main gearbox 68. The electrical distribution system 84 includes switchgear, cables, wires, breakers, switches, contactors, electrical power conditional and/or conversion (e.g., AC to DC or DC to AC conversion) components, and/or other electrical components to effect the transfer of electrical power between components of the electrical assembly 26 as well as other electrical components of the aircraft 1000 and/or the propulsion system 20. For example, the electrical distribution system 84 may be configured to supply electrical power from the generator 82 to one or more electrical loads 88 of the aircraft 1000 and/or its propulsion system 20 such as, but not limited to electronic control systems, environmental control systems, lighting systems, communication systems, and the like. The electrical assembly 26 may additionally include a battery and/or other energy storage device electrically connected to the electrical distribution system 84.

Referring to FIGS. 1-3, the propulsion system 20 includes the propulsor modules 24 at an exterior of the aircraft 1000. For example, the propulsion system 20 of FIG. 1 includes the first propulsor module 24A on a first side (e.g., a starboard side) of the housing 1006 and the second propulsor module 24B on a second side (e.g., a port side) of the housing 1006. Of course, the propulsor modules 24 may alternatively be mounted on other portions of the aircraft 1000 body (e.g., a fuselage section, stub wings, a tail section, etc.). Each of the propulsor modules 24 includes an exterior housing 90, an interior fixed structure 92, and an electric propulsor assembly 94.

The housing 90 includes a (e.g., tubular) housing body 96. The housing body 96 may be mounted onto an exterior of the aircraft 1000, for example, the housing 1006 proximate the gas turbine engine 22. The housing body 96 extends along an axis 98 of the propulsor module 24 between and to a first axial end 100 (e.g., a forward axial end) and a second axial end 102 (e.g., an aft axial end). The housing body 96 includes an interior surface 104 extending circumferentially about (e.g., completely around) the axis 98. The interior surface 104 forms and circumscribes a propulsor duct 106 through the housing 90 from the first axial end 100 to the second axial end 102. The housing body 96 (e.g., the interior surface 104) forms an inlet 108 of the propulsor duct 106 at the first axial end 100. The housing body 96 (e.g., the interior surface 104) forms an outlet 110 of the propulsor duct 106 at the second axial end 102.

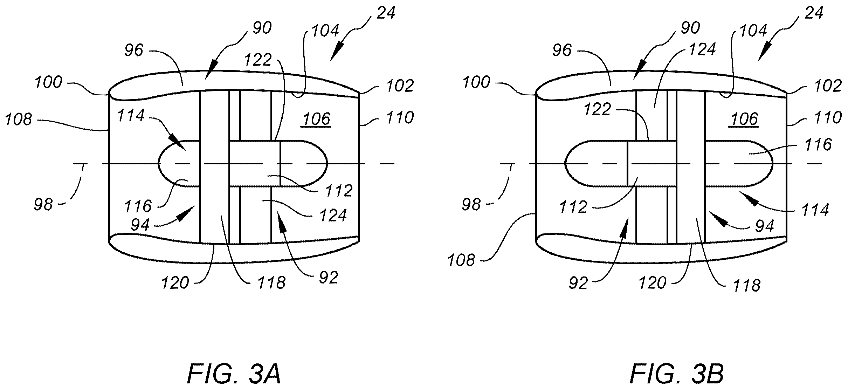

The propulsor assembly 94 includes an electric motor 112 and a bladed propulsor 114 (e.g., a bladed fan rotor). The electric motor 112 is mounted within the propulsor duct 106, for example, at the axis 98. The electric motor 112 is disposed axially between the inlet 108 and the outlet 110. The electric motor 112 is electrically connected with the electrical distribution system 84. The propulsor 114 is mechanically coupled with the electric motor 112 and configured to be driven by the electric motor 112 to rotate about the axis 98. The propulsor 114 includes a center body 116 and a plurality of blades 118. The center body 116 is disposed on the axis 98 and coupled with the electric motor 112. The blades 118 each project radially outward from the center body 116 to respective distal tip ends 120 disposed at the interior surface 104. The blades 118 are arranged on the center body 116 as a circumferential array and may be equispaced about the axis 98. The propulsor assembly 94 may be arranged with a tractor configuration or a pusher configuration. For example, the propulsor assembly 94 of FIG. 3A, having a tractor configuration, is arranged with the propulsor 114 disposed upstream of the fixed structure 92 (e.g., axially between the inlet 108 and the fixed structure 92). In contrast, the propulsor assembly 94 of FIG. 3B, having a pusher configuration, is arranged with the propulsor 114 disposed downstream of the fixed structure 92 (e.g., axially between the outlet 110 and the fixed structure 92).

The fixed structure 92 includes a center body 122 and a plurality of struts 124. The center body 122 is disposed about the axis 98. The electric motor 112 is (e.g., fixedly) mounted onto (e.g., within) the center body 122 such that the fixed structure 92 supports the propulsor assembly 94 within the housing 90. For example, the center body 122 may form an exterior aerodynamic housing of the electric motor 112. The struts 124 extend radially between and connect the center body 122 and the housing 90 (e.g., the interior surface 104). The struts 124 are arranged on the center body 122 as a circumferential array and may be equispaced about the axis 98.

During operation of the aircraft 1000 and its propulsion system 20, ambient air is directed into the compressor section 32 through the air intake section 30. The air is compressed in the compressor section 32 by the compressor rotor 52 and directed into a combustion chamber of the combustor 42. Fuel is injected into the combustion chamber and mixed with the compressed air to provide a fuel-air mixture. This fuel-air mixture is ignited, and combustion products thereof flow through and sequentially cause the first turbine rotor 54 and the second turbine rotor 58 to rotate. The rotation of the first turbine rotor 54 and the second turbine rotor 58 respectively drives rotation of the first rotating structure 44 and the second rotating structure 46. The second rotating structure 46 (e.g., the power turbine) drives rotation of the main rotor 1002 and the tail rotor 1004 through the drivetrain 28. The combustion products (e.g., gases) exiting the turbine section 36 are exhausted from the gas turbine engine 22 through the exhaust section 38.

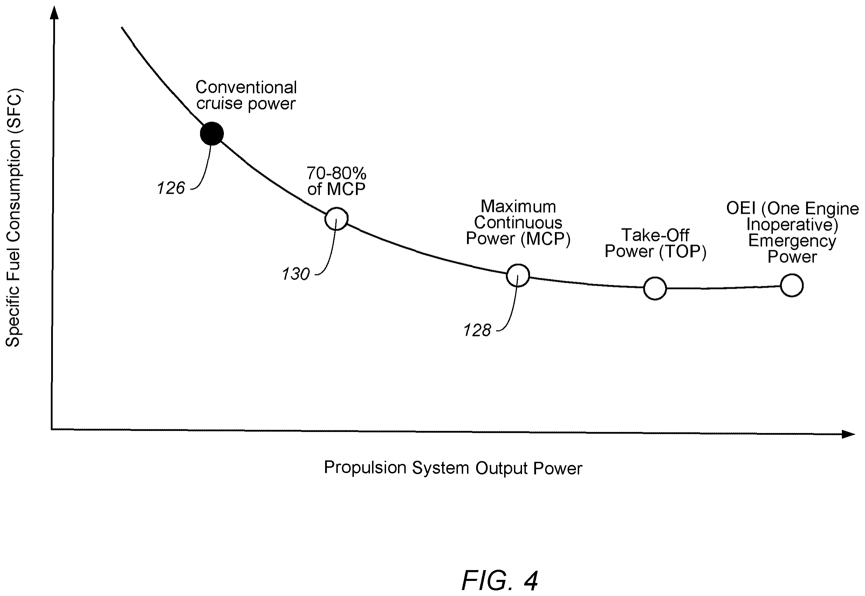

The second rotating structure 46 additionally drives the generator 82 through the drivetrain 28 (e.g., the main gearbox 68) to generate electrical power for the electric motor 112 of each of the propulsor modules 24. The electric motor 112 drives rotation of the propulsor 114 to generate horizontal thrust from the propulsor modules 24 to increase aircraft 1000 speed. A benefit of this approach, compared to conventional aircraft (e.g., helicopters) using, is to operate the gas turbine engine 22 (or gas turbine engines 22 for multi-engine aircraft) at a higher power during cruise flight modes where specific fuel consumption may be lower, thereby facilitating reduced mission fuel burn and/or longer flight range. FIG. 4 illustrates an exemplary graph of gas turbine engine(s) output power for a helicopter propulsion system vs. specific fuel consumption (SFC). Compared to a conventional helicopter which may operate at a conventional cruise output power 126 of approximately 40 percent to approximately 60 percent of a maximum continuous power (MCP) 128, the present disclosure propulsion system 20 facilitates operation of the gas turbine engine(s) 22 at a higher cruise output power 130, for example, between approximately 70 percent and approximately 80 percent of the maximum continuous power 128. This approach of the present disclosure may additionally avoid the need to have other thermal engines to drive aircraft side thrusters, thereby reducing cost (e.g., acquisition, operating, maintenance), weight, and/or powerplant complexity.

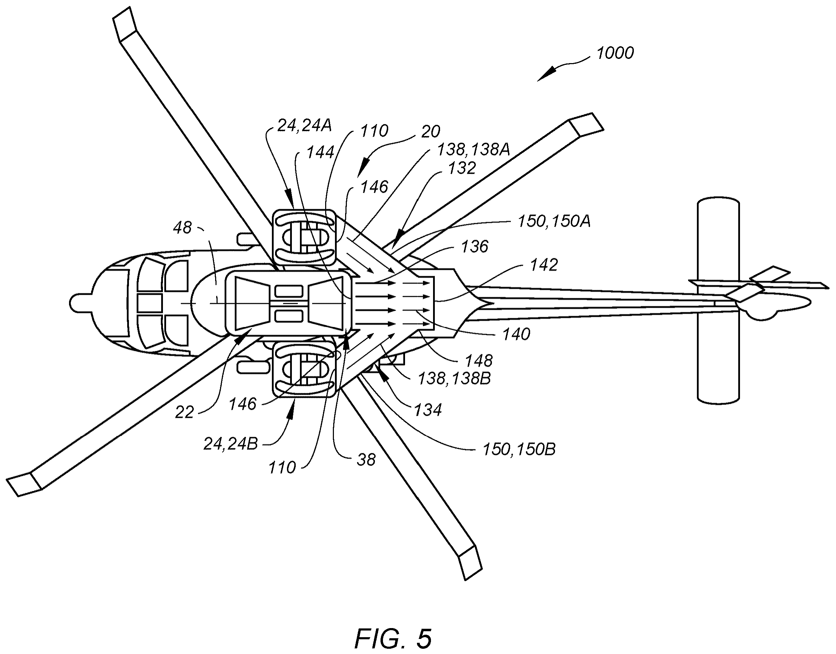

Referring now to FIG. 5, the present disclosure propulsion system 20 and its gas turbine engine 22 and propulsor modules 24 form a blended exhaust system 132. The blended exhaust system 132 of the present disclosure is operable to blend the combustion exhaust gas from the gas turbine engine 22 with the air exhaust from the propulsor modules 24 to facilitate reductions in overall exhaust temperatures from the propulsion system 20.

FIG. 5 schematically illustrates the blended exhaust system 132 of the propulsion system 20. The blended exhaust system 132 includes an exhaust duct assembly 134 forming at least one engine exhaust stream 136, at least one propulsor exhaust stream 138, and a blended exhaust stream 140. The duct assembly 134 may direct all or substantially all of the combustion exhaust of the gas turbine engine 22 from the exhaust section 38 (see also FIG. 2) along the engine exhaust stream 136 to the blended exhaust stream 140, and subsequently from at least one blended exhaust outlet 142 of the duct assembly 134. Similarly, the duct assembly 134 may direct all or substantially all of the air exhaust of one, more than one, and/or each of the propulsor modules 24 from the outlet 110 along the respective propulsor exhaust stream 138 to the blended exhaust stream 140, and subsequently from the blended exhaust outlet 142. Accordingly, the blended exhaust stream 140 may include all or substantially all of the combustion exhaust of the gas turbine engine 22 as well as the air exhaust of the propulsor module(s) 24.

The duct assembly 134 includes at least one engine exhaust inlet 144 and at least one propulsor exhaust inlet 146. The engine exhaust inlet 144 is disposed at the exhaust section 38. The propulsor exhaust inlet 146 is disposed at the outlet 110. The duct assembly 134 forms the engine exhaust stream 136 from the engine exhaust inlet 144 to the blended exhaust stream 140. The duct assembly 134 forms the propulsor exhaust stream 138 from the propulsor exhaust inlet 146 to the blended exhaust stream 140. The duct assembly 134 forms the blended exhaust stream 140 from an interface of the engine exhaust stream 136 and the propulsor exhaust stream 138 to the blended exhaust outlet 142.

The duct assembly 134 of FIG. 5 includes an engine exhaust duct 148. The duct assembly 134 of FIG. 5 further includes a propulsor exhaust duct 150 for each of the propulsor modules 24. The engine exhaust duct 148 of FIG. 5 extends from the engine exhaust inlet 144 to the blended exhaust outlet 142. For example, the engine exhaust duct 148 may extend substantially axially, relative to the rotational axis 48, between the engine exhaust inlet 144 and the blended exhaust outlet 142. The duct assembly 134 of FIG. 5 has a single blended exhaust outlet 142, however, as will be discussed in further detail, the duct assembly 134 may include more than one blended exhaust outlet 142. The engine exhaust duct 148 forms and/or circumscribes the engine exhaust stream 136 and the blended exhaust stream 140 of FIG. 5. The propulsor exhaust ducts 150 extend between and to the propulsor modules 24 (e.g., the outlet 110) and the engine exhaust duct 148. In particular, the duct assembly 134 includes a first propulsor exhaust duct 150A extending between and connecting the outlet 110 of the first propulsor module 24A and the engine exhaust duct 148 and a second propulsor exhaust duct 150B extending between and connecting the outlet 110 of the second propulsor module 24B and the engine exhaust duct 148. The propulsor exhaust ducts 150 form and/or circumscribe respective propulsor exhaust streams 138A, 138B from the propulsor modules 24A, 24B. The propulsor exhaust ducts 150 connect the propulsor modules 24 in fluid communication with the engine exhaust duct 148 at an intermediate (e.g., axially intermediate) portion of the engine exhaust duct 148 between the engine exhaust inlet 144 and the blended exhaust outlet 142, thereby directing the propulsor exhaust streams 138 into the engine exhaust stream 136 and forming the blended exhaust stream 140. The propulsor exhaust ducts 150 may extend laterally inward from the propulsor modules 24 to the engine exhaust duct 148.

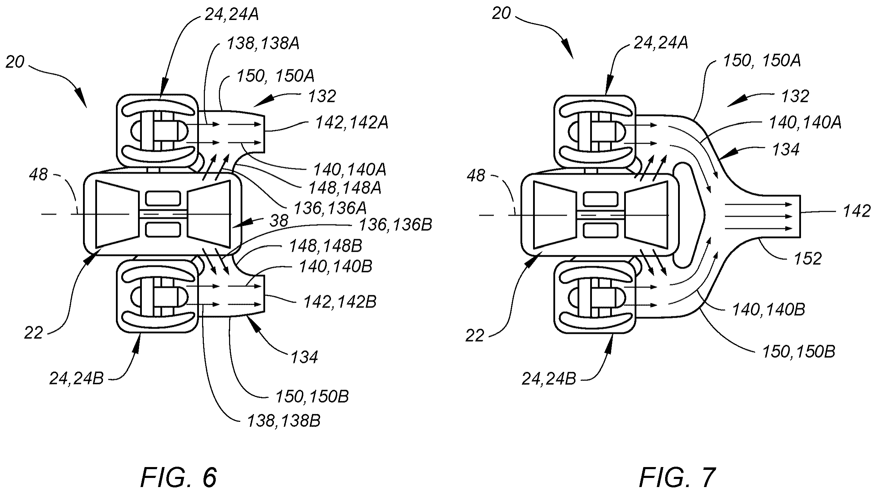

Referring to FIG. 6, in some embodiments, the duct assembly 134 may include more than one of the blended exhaust outlet 142, for example, a first blended exhaust outlet 142A and a second blended exhaust outlet 142B. The propulsor exhaust ducts 150A, 150B of FIG. 6 extends from the respective propulsor modules 24A, 24B (e.g., the outlet 110) to the respective blended exhaust outlets 142A, 142B. For example, the propulsor exhaust ducts 150A, 150B may extend substantially axially, relative to the rotational axis 48, between the respective propulsor modules 24A, 24B and the respective blended exhaust outlets 142A, 142B. The propulsor exhaust ducts 150A, 150B form and/or circumscribe respective propulsor exhaust streams 138A, 138B and respective blended exhaust streams 140A, 140B. The duct assembly 134 of FIG. 6 includes more than one engine exhaust duct 148, for example, a first engine exhaust duct 148A and a second engine exhaust duct 148B. The engine exhaust ducts 148A, 148B extend between and to the exhaust section 38 and the respective propulsor exhaust ducts 150A, 150B. The engine exhaust ducts 148A, 148B form and/or circumscribe respective engine exhaust streams 136A, 136B from the exhaust section 38. The engine exhaust ducts 148A, 148B connect the exhaust section 38 in fluid communication with the respective propulsor exhaust ducts 150A, 150B at an intermediate (e.g., axially intermediate) portions of the propulsor exhaust ducts 150A, 150B between propulsor exhaust inlets 146A, 146B and the blended exhaust outlets 142A, 142B of the respective propulsor exhaust ducts 150A, 150B, thereby directing the respective engine exhaust streams 136A, 136B into the respective propulsor exhaust streams 138A, 138B and forming the respective blended exhaust streams 140A, 140B. The engine exhaust ducts 148A, 148B may extend laterally outward from the exhaust section 38 to the propulsor exhaust ducts 150A, 150B.

Referring to FIG. 7, in some embodiments, the duct assembly 134 may be arranged with multiple blended exhaust streams 140, 140A-B and multiple engine exhaust ducts 148, 148B as described for FIG. 6, but with a single blended exhaust outlet 142. For example, the duct assembly 134 may further include a blended exhaust duct 152 disposed between and interconnecting the propulsor exhaust ducts 150A, 150B with the blended exhaust outlet 142. The blended exhaust streams 140A, 140B may be directed together by the blended exhaust duct 152 to the blended exhaust outlet 142.

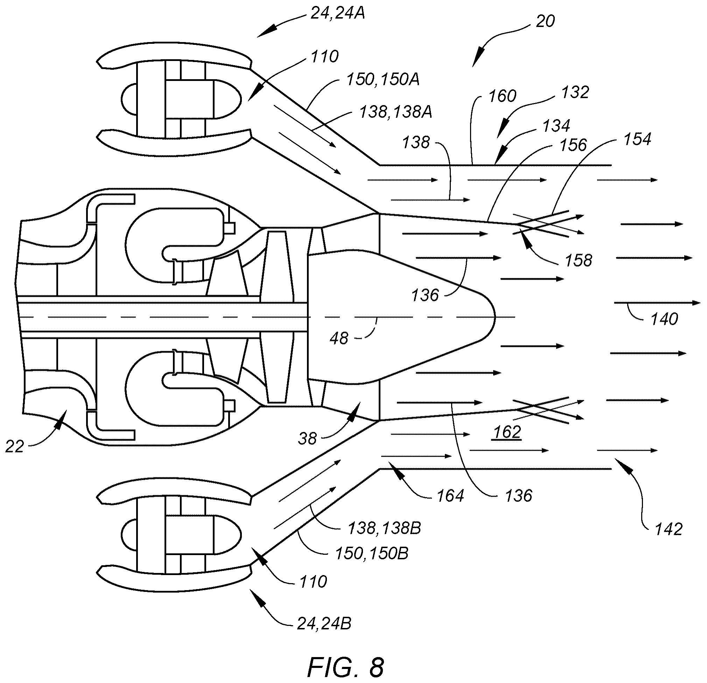

Referring to FIG. 8, in some embodiments, the exhaust section 38 may include a forced flow mixer structure 154 between the engine exhaust stream 136 and the propulsor exhaust stream 138. The exhaust section 38 of FIG. 8 includes an (e.g., tubular) engine exhaust nozzle 156 extending to a distal axial end 158 (e.g., a downstream end). The engine exhaust nozzle 156 of FIG. 8 extends circumferentially about (e.g., completely around) the rotational axis 48; however, the engine exhaust nozzle 156 may alternatively be arranged about an axis other than the rotational axis 48. The mixer structure 154 is disposed at the distal axial end 158. The duct assembly 134 further includes a (e.g., tubular) propulsor exhaust nozzle 160 circumscribing the engine exhaust nozzle 156 and forming the blended exhaust outlet 142. The propulsor exhaust nozzle 160 is disposed radially outward of the engine exhaust nozzle 156 forming an annular propulsor stream passage 162 between the propulsor exhaust nozzle 160 and the engine exhaust nozzle 156. The propulsor stream passage 162 extends (e.g., axially) between and to an upstream end 164 and the blended exhaust outlet 142. The propulsor exhaust ducts 150A, 150B extend between and to the propulsor modules 24 (e.g., the outlet 110) and the propulsor stream passage 162 at the upstream end 164. The propulsor exhaust ducts 150A, 150B direct the respective propulsor exhaust streams 138A, 138B into the propulsor stream passage 162 where the propulsor exhaust streams 138A, 138B mix and flow through the annular propulsor stream passage 162 to the blended exhaust outlet 142. The mixer structure 154, disposed radially between the engine exhaust stream 136 and the propulsor exhaust stream 138 (e.g., through the propulsor stream passage 162) forces mixing of the two streams 136, 138 forming the blended exhaust stream 140.

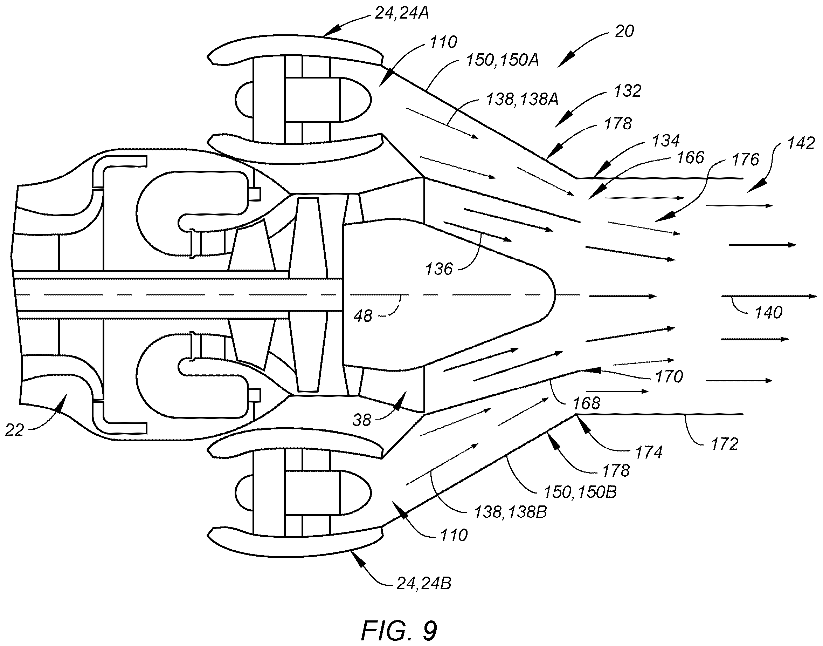

Referring to FIG. 9, in some embodiments, the duct assembly 134 may form an ejector exhaust nozzle assembly 166. The exhaust section 38 of FIG. 9 includes an (e.g., tubular) engine exhaust nozzle 168 extending to a distal axial end 170 (e.g., a downstream end). The engine exhaust nozzle 168 of FIG. 9 extends circumferentially about (e.g., completely around) the rotational axis 48; however, the engine exhaust nozzle 168 may alternatively be arranged about an axis other than the rotational axis 48. The engine exhaust nozzle 168 may form a portion (e.g., an inner radial portion) of the propulsor exhaust ducts 150. The duct assembly 134 further includes a (e.g., tubular) propulsor exhaust nozzle 172 circumscribing the engine exhaust nozzle 168 and forming the blended exhaust outlet 142. The propulsor exhaust nozzle 172 extends (e.g., axially extends) between and to an upstream end 174 and the blended exhaust outlet 142. The upstream end 174 may be disposed at (e.g., axially at) or downstream of the distal axial end 170. The propulsor exhaust nozzle 172 is disposed radially outward of the engine exhaust nozzle 168. The propulsor exhaust nozzle 172 forms and/or circumscribes an ejector stream passage 176 of the engine exhaust nozzle 168 downstream of the engine exhaust nozzle 168 (e.g., the distal axial end 170). The blended exhaust stream 140 is directed through the ejector stream passage 176 to the blended exhaust outlet 142. The propulsor exhaust ducts 150A, 150B extend between and to the propulsor modules 24 (e.g., the outlet 110) and the ejector stream passage 176 at the upstream end 174. The propulsor exhaust ducts 150A, 150B of FIG. 9 may include a convergent segment 178 at the upstream end 174. The convergent segment 178 may have a cross-sectional flow area which converges toward the ejector stream passage 176. The propulsor exhaust ducts 150A, 150B direct the respective propulsor exhaust streams 138A, 138B into the ejector stream passage 176 where the propulsor exhaust streams 138A, 138B facilitate drawing the engine exhaust stream 136 from the exhaust section 38 to the blended exhaust outlet 142, forming the blended exhaust stream 140.

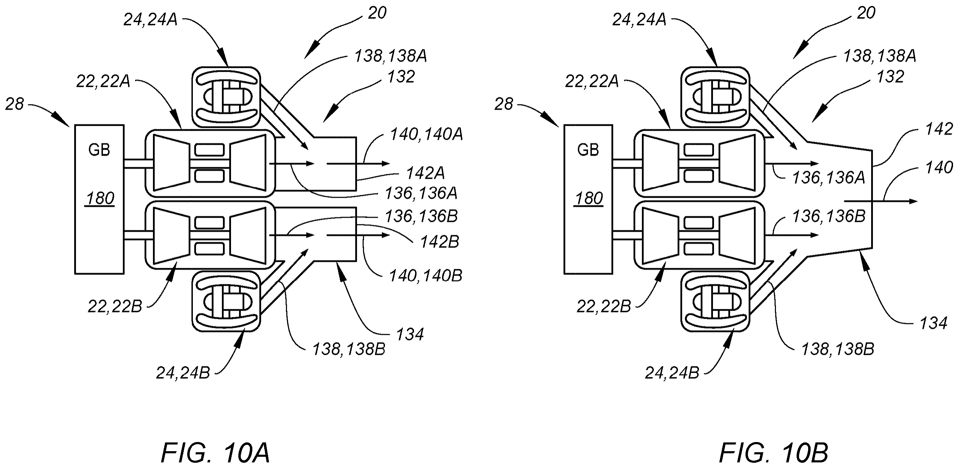

Referring to FIGS. 10A and 10B, the blended exhaust system 132 may alternatively be configured to facilitate blending the engine exhaust streams 136 and propulsor exhaust streams 138 for a multi-engine propulsion system 20 configuration. The propulsion systems 20 of FIGS. 10A and 10B each include a first gas turbine engine 22A and a second gas turbine engine 22B mechanically coupled with the main rotor 1002 and the tail rotor 1004 (see FIG. 1) by the drivetrain 28. For example, the drivetrain 28 may include a combining gearbox 180 mechanically coupling the output shafts (e.g., second shafts 56; see FIG. 2) of the gas turbine engines 22A, 22B. The blended exhaust system 132 for the multi-engine propulsion system 20 of FIGS. 10A and 10B may be arranged, for example, similar to that described above with respect to FIGS. 5-9. As shown in FIG. 10A, the duct assembly 134 for the multi-engine propulsion system 20 may include more than one blended exhaust outlet 142A, 142B. For example, the duct assembly 134 may couple the first propulsor module 24A and the first gas turbine engine 22A in fluid communication with the first blended exhaust outlet 142A and the duct assembly may couple the second propulsor module 24B and the second gas turbine engine 22B in fluid communication with the second blended exhaust outlet 142B. Alternatively, as shown in FIG. 10B, the duct assembly 134 for the multi-engine propulsion system 20 may a single blended exhaust outlet 142. For example, the duct assembly 134 may couple each of the first propulsor module 24A, the second propulsor module 24B, the first gas turbine engine 22A, and the second gas turbine engine 22B in fluid communication with the blended exhaust outlet 142.

While the principles of the disclosure have been described above in connection with specific apparatuses and methods, it is to be clearly understood that this description is made only by way of example and not as limitation on the scope of the disclosure. Specific details are given in the above description to provide a thorough understanding of the embodiments. However, it is understood that the embodiments may be practiced without these specific details.

It is noted that the embodiments may be described as a process which is depicted as a flowchart, a flow diagram, a block diagram, etc. Although any one of these structures may describe the operations as a sequential process, many of the operations can be performed in parallel or concurrently. In addition, the order of the operations may be rearranged. A process may correspond to a method, a function, a procedure, a subroutine, a subprogram, etc.

The singular forms "a," "an," and "the" refer to one or more than one, unless the context clearly dictates otherwise. For example, the term "comprising a specimen" includes single or plural specimens and is considered equivalent to the phrase "comprising at least one specimen." The term "or" refers to a single element of stated alternative elements or a combination of two or more elements unless the context clearly indicates otherwise. As used herein, "comprises" means "includes." Thus, "comprising A or B," means "including A or B, or A and B," without excluding additional elements.

It is noted that various connections are set forth between elements in the present description and drawings (the contents of which are included in this disclosure by way of reference). It is noted that these connections are general and, unless specified otherwise, may be direct or indirect and that this specification is not intended to be limiting in this respect. Any reference to attached, fixed, connected, or the like may include permanent, removable, temporary, partial, full and/or any other possible attachment option.

As used herein, the terms "comprise", "comprising", or any other variation thereof, are intended to cover a non-exclusive inclusion, such that a process, method, article, or apparatus that comprises a list of elements does not include only those elements but may include other elements not expressly listed or inherent to such process, method, article, or apparatus.

While various inventive aspects, concepts and features of the disclosures may be described and illustrated herein as embodied in combination in the exemplary embodiments, these various aspects, concepts, and features may be used in many alternative embodiments, either individually or in various combinations and sub-combinations thereof. Unless expressly excluded herein all such combinations and sub-combinations are intended to be within the scope of the present application. Still further, while various alternative embodiments as to the various aspects, concepts, and features of the disclosures--such as alternative materials, structures, configurations, methods, devices, and components, and so on--may be described herein, such descriptions are not intended to be a complete or exhaustive list of available alternative embodiments, whether presently known or later developed. Those skilled in the art may readily adopt one or more of the inventive aspects, concepts, or features into additional embodiments and uses within the scope of the present application even if such embodiments are not expressly disclosed herein. For example, in the exemplary embodiments described above within the Detailed Description portion of the present specification, elements may be described as individual units and shown as independent of one another to facilitate the description. In alternative embodiments, such elements may be configured as combined elements.

## Claims

1. A propulsion system for an aircraft, the propulsion system comprising:
a propulsion rotor;
an engine having an axis, the engine mechanically coupled to the propulsion rotor, the engine comprising an exhaust section;
a propulsor module comprising a housing and a propulsor assembly, the housing forming a propulsor duct comprising a duct inlet and a duct outlet, the propulsor assembly comprising an electric motor and a bladed propulsor disposed within the propulsor duct, the bladed propulsor coupled with the electric motor; and
a blended exhaust system comprising an exhaust duct assembly, the exhaust duct assembly comprising:
an engine exhaust inlet at the exhaust section;
a propulsor exhaust inlet at the duct outlet; and
a blended exhaust outlet,
the exhaust duct assembly configured to form an engine exhaust stream, a propulsor exhaust stream, and a blended exhaust stream with the exhaust duct assembly receiving the engine exhaust stream from the exhaust section, the exhaust duct assembly receiving the propulsor exhaust stream from the duct outlet, and the exhaust duct assembly directing the blended exhaust stream out of the blended exhaust system through the blended exhaust outlet, the blended exhaust stream comprising the engine exhaust stream and the propulsor exhaust stream.

2. The propulsion system of claim 1, further comprising a generator mechanically coupled with the engine and electrically connected with the electric motor.

3. The propulsion system of claim 1 or 2, wherein the engine exhaust stream comprises combustion exhaust gas from the engine exhaust system, the propulsor exhaust stream comprises ambient air from the propulsor module, and the blended exhaust stream comprises a mixture of the combustion exhaust gas and the ambient air.

4. The propulsion system of claim 1, 2 or 3, wherein the exhaust duct assembly directs the engine exhaust stream from the exhaust section to the blended exhaust stream, the exhaust duct assembly directs the propulsor exhaust stream from the duct outlet to the blended exhaust stream, and the exhaust duct assembly directs the blended exhaust stream from an interface of the engine exhaust stream and the propulsor exhaust stream to the blended exhaust outlet.

5. The propulsion system of any preceding claim, wherein the exhaust duct assembly comprises an engine exhaust duct extending from the engine exhaust inlet to the blended exhaust outlet and a propulsor exhaust duct extending between the propulsor module and the engine exhaust duct, and the propulsor exhaust duct connects the propulsor module in fluid communication with the engine exhaust duct at an axially intermediate portion of the engine exhaust duct.

6. The propulsion system of any preceding claim, wherein the propulsion system comprises the propulsor module and a second propulsor module, the second propulsor module comprising a second housing and a second propulsor assembly, the second housing forming a second propulsor duct comprising a second duct inlet and a second duct outlet, the second propulsor assembly comprising a second electric motor and a second bladed propulsor disposed within the second propulsor duct, the second bladed propulsor coupled with the second electric motor.

7. The propulsion system of claim 6, wherein the exhaust duct assembly forms a second propulsor exhaust stream, the exhaust duct assembly receives the second propulsor exhaust stream from the second duct outlet, and the blended exhaust stream further comprises the second propulsor exhaust stream.

8. The propulsion system of any preceding claim, wherein the blended exhaust outlet comprises a single outlet from the exhaust duct assembly.

9. The propulsion system of claim 7, wherein the blended exhaust outlet comprises a first blended exhaust outlet and a second blended exhaust outlet, the first blended exhaust outlet receives a first engine exhaust stream from the exhaust section and the propulsor exhaust stream, and the second blended exhaust outlet receives a second engine exhaust stream from the exhaust section and the second propulsor exhaust stream.

10. The propulsion system of any preceding claim, wherein the exhaust duct assembly further comprises a forced flow mixer structure disposed between the engine exhaust stream and the propulsor exhaust stream.

11. The propulsion system of any preceding claim, wherein the blended exhaust system comprises an ejector exhaust nozzle assembly forming the engine exhaust stream and the propulsor exhaust stream.

12. The propulsion system of any preceding claim, wherein the propulsion system comprises a second engine mechanically coupled to the propulsion rotor, the second engine comprising a second exhaust section connected in fluid communication with the blended exhaust outlet by the exhaust duct assembly.

13. A method of operating a propulsion system for an aircraft comprising:
driving rotation of a propulsion rotor with an engine mechanically coupled with the propulsion rotor;
operating a propulsor module comprising an electric motor and a bladed propulsor by driving rotation of the bladed propulsor with the electric motor;
exhausting combustion gas from the engine through a blended exhaust system forming an engine exhaust stream;
exhausting ambient air from the propulsor module through the blended exhaust system forming a propulsor exhaust stream; and
blending the engine exhaust stream and the propulsor exhaust stream into a blended exhaust stream and discharging the blended exhaust stream from a blended exhaust outlet of the blended exhaust system.

14. The method of claim 13, further comprising operating the engine during a cruise flight condition of the aircraft at between approximately seventy percent and approximately eighty percent of a maximum continuous power of the engine.
